# EUROPEAN PATENT APPLICATION

(11) **EP 4 582 513 A1**
(43) Date of publication of application: **09.07.2025**
(21) Application number: 24219745.7
(22) Date of filing: 13.12.2024
(51) Int. Cl.: C10B 53/07, C10G 1/10

(54) **APPARATUS AND METHOD FOR RECOVERING CARBON FIBER AND GLASS FIBER**

(30) Priority: 05.01.2024 KR 20240001953
(71) Applicant: Doosan Enerbility Co., Ltd., Seongsan-gu Changwon-si, Gyeongsangnam-do 51711 (KR)
(72) Inventor: CHO, Sung Jin, 50976 Gimhae-si, Gyeongsangnam-do (KR); NOH, Sang Eun, 13610 Seongnam-si, Gyeonggi-do (KR); SEON, Chil Yeong, 16846 Yongin-si, Gyeonggi-do (KR)
(74) Representative: BCKIP Part mbB

(57) **Abstract**

An apparatus and a method for recovering carbon fiber and glass fiber. The apparatus includes a waste composite material supply unit, a reaction unit, a heat supply unit, a reforming unit, and a separation unit. The waste composite material supply unit includes a shredding module which shreds the waste composite material and a storage module which stores the shredded waste composite material. The reaction unit heats the waste composite material supplied from the waste composite material supply unit. The heat supply unit supplies heat to the reaction unit. The reforming unit separates pyrolysis gas discharged from the reaction unit into gas and oil. The separation unit includes a separation part which separates a product of the reaction unit into a first material and a second material, a first chamber which accommodates the first material, and a second chamber which accommodates the second material.

## Description

The present application claims priority to Korean Patent Application No. 10-2024-0001953, filed on January 5, 2024.

### BACKGROUND

### 1. Technical Field

The present disclosure relates to an apparatus and a method for recovering carbon fiber and glass fiber.

### 2. Description of the Related Art

Wind power generation is a method of power generation that converts the kinetic energy of wind into mechanical energy by rotating blades, and then converts the mechanical energy into electrical energy. The use of the method is increasing as an alternative to existing power generation methods that mainly use fossil fuels.

A wind turbine has a plurality of blades mounted on a rotating shaft thereof. To produce more electrical energy, the blades are made long and wide. As the size of each of the blades increases, the weight of the blade increases. However, the blade is required to be made as light as possible for energy efficiency. Additionally, since the blade is constantly exposed to wind, the strength of the blade is required to be improved to ensure durability thereof. To solve these problems, carbon fiber reinforced plastic or glass fiber reinforced plastic is used as the material of the blade. A composite material containing carbon fiber and glass fiber is lightweight yet highly strong, and is used in a variety of fields, such as automobiles, and aviation, etc. in addition to blades.

However, once the blades of a wind turbine break or reach the end of their lifespan, disposal of waste blades becomes a problem. Typically, composite materials such as carbon fiber reinforced plastic or glass fiber reinforced plastic are difficult to recycle and are often landfilled. However, it is impossible to continue to landfill the increasing volume of composite material waste, and the need for non-landfill treatment methods or recycling methods continues to arise.

Accordingly, there is a need to develop an apparatus and a method capable of recovering a carbon fiber or a glass fiber from waste blades which have reached the end of their lifespan. Additionally, there is a need to develop an apparatus and a method capable of recovering carbon fibers and glass fibers contained in a waste composite material generated by the automobile industry, and aviation industry, in addition to waste blades.

The foregoing is intended merely to aid in the understanding of the background of the present disclosure, and is not intended to mean that the present disclosure falls within the purview of the related art that is already known to those skilled in the art.

### SUMMARY

Accordingly, the present disclosure has been made keeping in mind the above problems occurring in the related art, and an objective of the present disclosure is to provide a method for recovering carbon fiber and glass fiber, in which a carbon fiber and a glass fiber are capable of being recovered from a waste composite material in a single process.

Another objective of the present disclosure is to provide a method for recovering carbon fiber and glass fiber, in which fuel gas and fuel oil are capable of being recovered in the process of recovering a carbon fiber and a glass fiber from a waste composite material.

An apparatus for recovering carbon fiber and glass fiber according to an embodiment of the present disclosure includes a waste composite material supply unit, a reaction unit, a heat supply unit, a reforming unit, and a separation unit. The waste composite material supply unit includes a shredding module which shreds the waste composite material and a storage module which stores the shredded waste composite material. The reaction unit heats the waste composite material supplied from the waste composite material supply unit. The heat supply unit supplies heat to the reaction unit. The reforming unit separates pyrolysis gas discharged from the reaction unit into gas and oil. The separation unit includes a separation part which separates a product of the reaction unit into a first material and a second material, a first chamber which accommodates the first material, and a second chamber which accommodates the second material.

In the apparatus for recovering carbon fiber and glass fiber according to an embodiment of the present disclosure, the reaction unit may include one pyrolysis reactor. The pyrolysis reactor may be a batch pyrolysis reactor. The first pyrolysis and the second pyrolysis may be performed sequentially in the pyrolysis reactor.

In the apparatus for recovering carbon fiber and glass fiber according to an embodiment of the present disclosure, the reaction unit may include at least two pyrolysis reactors.

In the apparatus for recovering carbon fiber and glass fiber according to an embodiment of the present disclosure, the plurality of pyrolysis reactors may be batch pyrolysis reactors.

In the apparatus for recovering carbon fiber and glass fiber according to an embodiment of the present disclosure, the plurality of pyrolysis reactors are continuous pyrolysis reactors.

In the apparatus for recovering carbon fiber and glass fiber according to an embodiment of the present disclosure, the reforming unit may include a catalyst tower, a heat exchanger, and a separation tank.

In the apparatus for recovering carbon fiber and glass fiber according to an embodiment of the present disclosure, the reforming unit may further include a washing tank, and a pressure control tank.

In the apparatus for recovering carbon fiber and glass fiber according to an embodiment of the present disclosure, the separation unit may further include: a first carding module configured to card the first material and a first pelletizing module configured to pelletize the first material; and a second carding module configured to card the second material, and a second pelletizing module configured to pelletize the second material.

In the apparatus for recovering carbon fiber and glass fiber according to an embodiment of the present disclosure, the separation unit may detect a length of each of the first material and the second material, and may feed the first material and the second material into the first pelletizing module and the second pelletizing module, respectively, when the length of each of the first material and the second material is 5mm or less.

In the apparatus for recovering carbon fiber and glass fiber according to an embodiment of the present disclosure, the heat supply unit may include a burner, a heat exchanger, an air blower, a scrubber, and a chimney.

A method for recovering carbon fiber and glass fiber according to an embodiment of the present disclosure includes: supplying a waste composite material into a reactor; heating, first, the waste composite material; heating, second, the waste composite material which is first heated; extracting oil from pyrolysis gas discharged from the first heating; and separating a product of the second heating into a first material and a second material.

In the method for recovering carbon fiber and glass fiber according to an embodiment of the present disclosure, the first heating and the second heating may be performed sequentially in one pyrolysis reactor.

In the method for recovering carbon fiber and glass fiber according to an embodiment of the present disclosure, the first heating may be performed in a first pyrolysis reactor, and the second heating may be performed in a second pyrolysis reactor.

In the method for recovering carbon fiber and glass fiber according to an embodiment of the present disclosure, in the first heating, a heat source may be the pyrolysis gas and LNG or LPG, and in the second heating, a heat source may be combustion gas.

In the method for recovering carbon fiber and glass fiber according to an embodiment of the present disclosure, a zeolite-based catalyst is used for reforming the pyrolysis gas.

According to an embodiment of the present disclosure, the method for recovering carbon fiber and glass fiber may cool the reformed pyrolysis gas and separate the reformed pyrolysis gas into gas and oil.

In the method for recovering carbon fiber and glass fiber according to an embodiment of the present disclosure, in the separating, the first material and the second material may be separated from each other by density difference therebetween.

In the method for recovering carbon fiber and glass fiber according to an embodiment of the present disclosure, in the separating, each of the first material and the second material may be carded and then pelletized.

In the method for recovering carbon fiber and glass fiber according to an embodiment of the present disclosure, in the separating, a length of each of the first material and the second material may be detected, and when the length of each of the first material and the second material is 5mm or less, the first material and the second material may be pelletized.

In the method for recovering carbon fiber and glass fiber according to an embodiment of the present disclosure may further include: shredding the waste composite material; and drying the shredded waste composite material with hot air, before the supplying of the waste composite material.

According to the embodiment of the present disclosure, it is possible to effectively separate a carbon fiber or a glass fiber from a waste composite material.

According to the embodiment of the present disclosure, it is possible to recycle pyrolysis gas, which is generated in the process of recovering a carbon fiber and a glass fiber, as fuel.

### BRIEF DESCRIPTION OF THE DRAWINGS

FIG. 1 is a block diagram schematically illustrating an apparatus for recovering carbon fiber and glass fiber according to an embodiment of the present disclosure;
FIG. 2 is a diagram schematically illustrating a waste composite material supply unit and a reaction unit in the apparatus for recovering carbon fiber and glass fiber according to an embodiment of the present disclosure;
FIG. 3 is a diagram illustrating two pyrolysis reactors stacked and installed according to an embodiment of the present disclosure;
FIG. 4 is a diagram schematically illustrating the waste composite material supply unit, the reaction unit and a heat supply unit in the apparatus for recovering carbon fiber and glass fiber according to an embodiment of the present disclosure;
FIG. 5 is a diagram schematically illustrating the reaction unit, the heat supply unit, a reforming unit in the apparatus for recovering carbon fiber and glass fiber according to an embodiment of the present disclosure;
FIG. 6 is a diagram schematically illustrating the reaction unit and a separation unit in the apparatus for recovering carbon fiber and glass fiber according to an embodiment of the present disclosure;
FIG. 7 is a flowchart illustrating a method for recovering carbon fiber and glass fiber according to an embodiment of the present disclosure; and
FIG. 8 is a diagram illustrating overall the apparatus for recovering carbon fiber and glass fiber according to an embodiment of the present disclosure.

### DETAILED DESCRIPTION

Since the present disclosure can be modified in various ways and can have various embodiments, specific embodiments will be exemplified and explained in detail in the detailed description. However, it should be noted that the present disclosure is not limited thereto, and may include all of modifications, equivalents, and substitutions within the spirit and scope of the present disclosure.

Terms used herein are used to merely describe specific embodiments, and are not intended to limit the present disclosure. As used herein, an element expressed as a singular form includes a plurality of elements, unless the context clearly indicates otherwise. Further, it will be understood that the term "comprising" or "including" specifies the presence of stated features, numbers, steps, operations, elements, parts, or combinations thereof, but does not preclude the presence or addition of one or more other features, numbers, steps, operations, elements, parts, or combinations thereof.

Hereinafter, the exemplary embodiments of the present disclosure will be described in detail with reference to the accompanying drawings. It should be noted that like elements are denoted in the drawings by like reference symbols as whenever possible. Further, the detailed description of known functions and configurations that may obscure the gist of the present disclosure will be omitted. For the same reason, some of the elements in the drawings are exaggerated, omitted, or schematically illustrated.

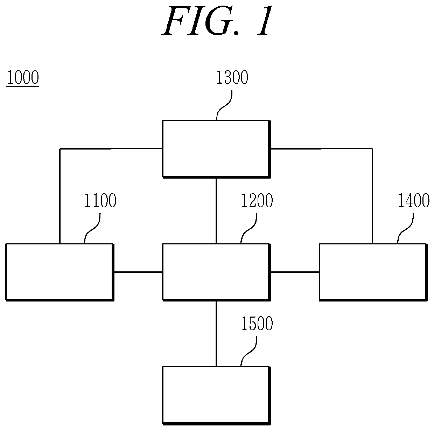

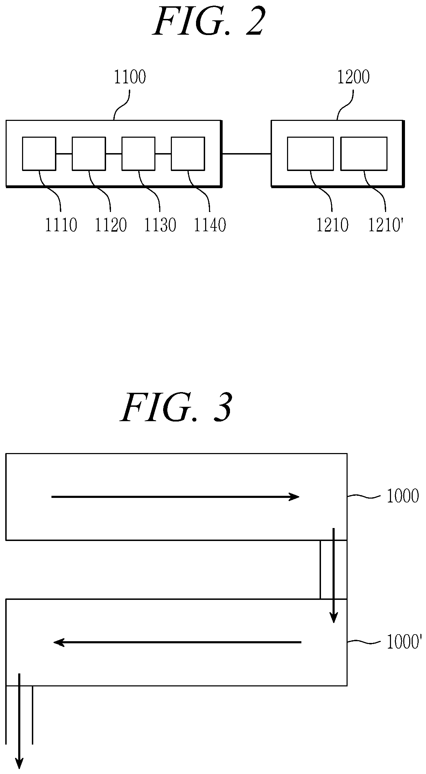

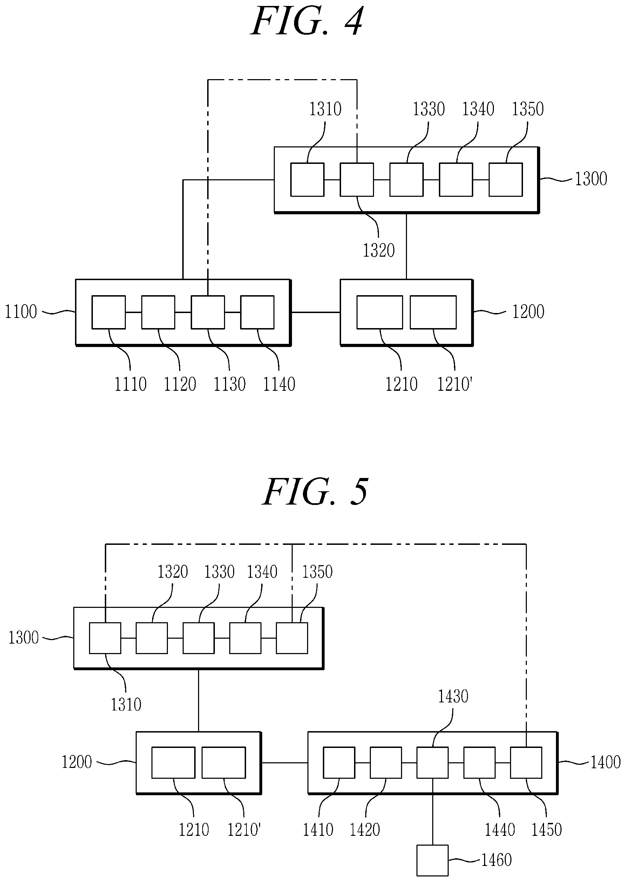

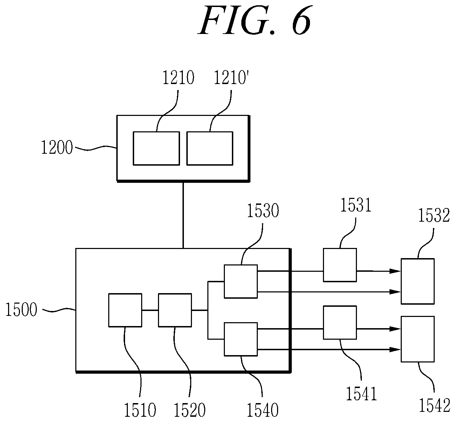

FIG. 1 is a block diagram schematically illustrating an apparatus for recovering carbon fiber and glass fiber according to an embodiment of the present disclosure, FIG. 2 is a diagram schematically illustrating a waste composite material supply unit and a reaction unit in the apparatus for recovering carbon fiber and glass fiber according to an embodiment of the present disclosure, and FIG. 3 is a diagram illustrating two pyrolysis reactors stacked and installed according to an embodiment of the present disclosure, FIG. 4 is a diagram schematically illustrating the waste composite material supply unit, the reaction unit and a heat supply unit in the apparatus for recovering carbon fiber and glass fiber according to an embodiment of the present disclosure, FIG. 5 is a diagram schematically illustrating the reaction unit, the heat supply unit, a reforming unit in the apparatus for recovering carbon fiber and glass fiber according to an embodiment of the present disclosure, and FIG. 6 is a diagram schematically illustrating the reaction unit and a separation unit in the apparatus for recovering carbon fiber and glass fiber according to an embodiment of the present disclosure.

As illustrated in FIG. 1, an apparatus 1000 for recovering carbon fiber and glass fiber according to the present disclosure includes a waste composite material supply unit 1100, a reaction unit 1200, a heat supply unit 1300, a reforming unit 1400, and a separation unit 1500.

The waste composite material supply unit 1100 supplies a waste composite material to the reaction unit 1200. The waste composite material supply unit 1100 may pretreat the waste composite material to a state suitable for pyrolysis and supply the pretreated waste composite material to the reaction unit 1200.

As illustrated in FIG. 2, the waste composite material supply unit 1100 is provided with a shredding module 1110, a transport module 1120, a storage module 1130, and a feeding module 1140. The shredding module 1110 shreds a collected waste composite material to a predetermined size. Since a waste composite material is so long that the waste composite material reaches 50 meters in length, it is not easy to shred the waste composite material directly. Therefore, the waste composite material is cut lengthwise and then fed into the shredding module 1110. The waste composite material may be cut to a length of 10 m or less by using a wire saw, etc.

The shredding module 1110 shreds the waste composite material, which is cut to the predetermined length, to have thickness of 20 mm or less. The shredding process of waste composite material generates a large amount of dust. An inlet of the shredding module 1110 may be sealed to prevent dust from escaping outside the shredding module 1110.

Additionally, the shredding module 1110 may be provided with a dust suction part to remove dust generated during the shredding process. Air may be continuously circulated within the shredding module 1110 to collect dust.

In order to further reduce the sizes of the shredded waste composite materials, in another embodiment, the shredded waste composite materials may be rolled once more.

The transport module 1120 transports the shredded waste composite materials to the next process. In the recovery process, a conveyor may be used to transport the waste composite material to each unit and each module. A plurality of conveyors may be installed in succession or in parallel depending on the movement path of the waste composite material. The waste composite material may be screened during the transportation.

The shredded waste composite materials have different particle sizes. When the waste composite materials with different particle sizes are pyrolyzed, there is a risk that blade fragments with smaller particle sizes will be carbonized quickly and contaminate products of the pyrolysis. Accordingly, the shredded waste blades may be filtered on a screen, and if each of the sizes of the shredded particles is equal to or smaller than a predetermined size, they may be removed to the screen.

Meanwhile, the shredding module 1110 may adjust the shredding size of the waste composite material. The crushing size of the waste composite material may be adjusted depending on the target condition and final product of the waste composite material. When recovery of long fibers is possible, the shredding sizes of the waste blades may be increased.

The transport module 1120 transports the shredded waste composite material to the storage module 1130. The storage module 1130 stores the waste composite material for a predetermined period of time before the waste composite material is fed into the reactor. The storage module 1130 may be supplied with hot air to dry the stored waste composite material.

The shredded waste composite material includes moisture, which generates water vapor during the pyrolysis process. The amount of water vapor generated may be reduced by dying the waste composite material. The hot air may be supplied from the heat supply unit 1300, which will be described later.

In this embodiment, the waste composite material is stored in the storage module 1130 after passing through the shredding module. However, depending on the size of the waste composite material and the size of the pyrolysis reactor of the reaction unit 1200, the waste composite material may be stored in the storage module directly without passing through the shredding module and then fed into the reaction unit.

The feeding module 1140 feeds the waste composite material into a pyrolysis reactor 1210 of the reaction unit 1200. A single-shaft screw feeder may be used to feed the shredded waste composite material. The feeding module 1140 may feed the waste composite material into the pyrolysis reactor 1210 either one-time or continuously.

Meanwhile, it is necessary to lower the temperature of the waste composite material placed in the feeding module 1140. A cooling jacket may be disposed on each of the lower surface and side surface of the feeding module 1140 to cool the waste composite material. The pyrolysis reactor, which is connected to the lower part of an inlet, is at a high temperature due to high-temperature gas flowing inside. By arranging the cooling jacket on each of the lower surface and side surface of the feeding module 1140, heat emitted from the pyrolysis reactor is transferred to the feeding module 1140, preventing a fire from occurring in a waste blade located within the feeding module 1140 before being fed into the pyrolysis reactor. The cooling jacket may lower the temperature of the fed waste composite material by receiving cold water from the cooling tower of the reforming unit.

The reaction unit 1200 pyrolyzes the waste composite material. To pyrolyze the waste composite material, the pyrolysis reactor 1210 of the reaction unit 1200 receives the waste composite material from the waste composite material supply unit 1100. The reaction unit 1200 is provided with one or more pyrolysis reactors 1210 and 1210'.

Each of the pyrolysis reactors 1210 and 1210' has space in which the waste composite material is received. In the present disclosure, the waste composite material is directly or indirectly heated by a burner. In the present disclosure, the waste composite material may be indirectly heated.

For example, each of the pyrolysis reactors 1210 and 1210' may include an outer casing and an inner casing. High temperature gas may flow into the outer casing. The high temperature gases may be generated by the burner placed outside the outer casing. The burner may generate combustion gas by combusting pyrolysis gas and LNG/LPG. The generated high-temperature combustion gas is supplied into the outer casing. The temperature of the combustion gas may be 400 to 500°C.

The inner casing is accommodated within the outer casing and receives the waste composite material from the waste composite material supply unit. The waste composite material is pyrolyzed within the inner casing. In order to maintain a reducing atmosphere during the pyrolysis of the waste composite material, flue gas may be injected into and released from the inner casing. The inner casing may have a cylindrical shape. Screws may be disposed within the inner casing to move and mix the waste composite material.

For efficient pyrolysis, the waste composite material needs to be uniformly mixed with air. To mix the waste composite material, the inner casing may rotate, or the screw placed within the inner casing may rotate. The rotation speed of the inner casing or the screw may vary depending on the target residence time of the waste composite material.

As the diameter of the inner casing decreases, heat transfer efficiency increases, but there is a problem that as the diameter decreases, a processing capacity also decreases. To solve this problem and ensure effective heat transfer to the waste composite material, baffles may be placed on the inner wall of the inner casing. The plurality of baffles may be arranged by being longitudinally and circumferentially spaced apart from each other on the inner wall of the inner casing. In this embodiment, the pyrolysis reactors 1210 and 1210' are illustrated, but the present disclosure is not limited thereto, and pyrolysis reactors of various shapes and capacities may be used.

Meanwhile, the waste composite material introduced into the pyrolysis reactor 1210 is pyrolyzed within the pyrolysis reactor 1210. The pyrolysis stage may go through the first pyrolysis stage and the second pyrolysis stage. Resin such as epoxy and wood contained in the waste composite material are gasified by the first pyrolysis. Resin and char remaining in the lump of the carbon fiber and the glass fiber are pyrolyzed by the second pyrolysis.

The first pyrolysis and the second pyrolysis may be performed in one pyrolysis reactor or in two or more pyrolysis reactors. A first pyrolysis reactor and a second pyrolysis reactor may be the same type of reactors, but may be different types of reactors. For example, the first pyrolysis reactor may be a rotary kiln and the second pyrolysis reactor may be a screw type. The internal temperatures of the first and second pyrolysis reactors 1210 and 1210' may be 400 to 500°C.

In an embodiment, the first pyrolysis and the second pyrolysis may be performed in one pyrolysis reactor 1210. In this case, the pyrolysis reactor 1210 may be a batch pyrolysis reactor. A predetermined amount of the waste composite material is fed into the pyrolysis reactor 1210, and the first pyrolysis and second pyrolysis are sequentially performed in the pyrolysis reactor 1210. After the first pyrolysis is performed, impurities such as char are screened out, and the second pyrolysis may be performed continuously in the pyrolysis reactor 1210. During the first pyrolysis, the burner may be supplied with pyrolysis gas and LNG or LPG from a fuel tank, and during the second pyrolysis, the burner may be supplied with combustion gas from the first pyrolysis reactor.

In another embodiment, two pyrolysis reactors 1210 and 1210' may be arranged in series to perform the pyrolysis and the second pyrolysis, respectively. In this case, each of the pyrolysis reactors 1210 and 1210' may be a batch pyrolysis reactor. The first pyrolysis is performed in the first pyrolysis reactor 1210, and the second pyrolysis is performed in the second pyrolysis reactor 1210'. A predetermined amount of the waste composite material is fed into the first pyrolysis reactor 1210 and the first pyrolysis is performed. When the first pyrolysis is completed, impurities such as char are screened out from the product of the first pyrolysis and the product of the first pyrolysis is moved to the second pyrolysis reactor. The second pyrolysis is performed in the second pyrolysis reactor 1210'. During the first pyrolysis, the burner may be supplied with pyrolysis gas and LNG or LPG from the fuel tank, and during the second pyrolysis, the burner may be supplied with combustion gas from the first pyrolysis reactor.

In another embodiment, the two pyrolysis reactors 1210 and 1210' are arranged in series to perform the first pyrolysis and the second pyrolysis, respectively, and each of the pyrolysis reactors 1210 and 1210' may be a continuous pyrolysis reactor. A predetermined amount of the waste composite material is continuously fed into the first pyrolysis reactor 1210 to perform the first pyrolysis. After impurities such as char are screened out from the product of the first pyrolysis discharged from the first pyrolysis reactor 1210, the product of the first pyrolysis is continuously fed into the second pyrolysis reactor 1210'. The second pyrolysis is performed in the second pyrolysis reactor 1210' to pyrolyze resin and char remaining in a lump of the carbon fiber and glass fiber.

In another embodiment, two or more first pyrolysis reactors 1210 may be connected to each other and used by considering the residence time of the waste composite material in the reactor and the size of the waste composite material to be introduced, etc. For example, the reaction unit 1200 may include two first pyrolysis reactors 1210 and 1210 and one second pyrolysis reactor 1210' to secure the residence time during the first pyrolysis.

The first pyrolysis reactor 1210 and the second pyrolysis reactor 1210' may be connected to each other horizontally or vertically. As illustrated in FIG. 3, when the plurality of pyrolysis reactors 1210 and 1210' are vertically connected to each other, the size of an entire plant may be reduced, and the degree of freedom in design may be increased. When a plurality of pyrolysis reactors 1210 and 1210' are connected vertically, the size of the entire plant may be reduced, and the degree of freedom in design may be increased.

During the first pyrolysis, oxygen concentration within the first pyrolysis reactor 1210 is required to be maintained to be 10% or less. A sensor may be placed inside the first pyrolysis reactor 1210 to continuously measure the oxygen concentration. In another embodiment, a sensor may be placed in an exhaust line to measure oxygen concentration in exhausted gas.

The residence time of fragments of the waste composite material in the first pyrolysis reactor 1210 during the first pyrolysis may be 9 hours or less. When the residence time is 9 hours or more, reactants may be excessively carbonized. A temperature inside the first pyrolysis reactor 1210 may be 400 to 500°C. Heat sources for the first pyrolysis may be pyrolysis gas and LNG/LPG.

As a result of the first pyrolysis, resin such as epoxy and wood contained in the waste composite material are gasified and the lump of carbon fiber and glass fiber remains in the first pyrolysis reactor 1210. In this case, resin that is not gasified is carbonized (charred) and remains on the surfaces of the carbon fiber and glass fiber.

As the product of the process of the first pyrolysis, in addition to gas and char, oil vapor is generated. The oil vapor is cooled while the oil vapor passes through the reforming unit 1400 to be described later, and some of the oil vapor may be extracted as gas and some thereof may be extracted as oil. The oil vapor may be cooled by water. The gas generated from the oil vapor may have a calorific value and flow into the gas tank of the heat supply unit 1300 to be used as an indirect heat source for the second pyrolysis.

Some of the char remaining in the lump of the carbon fiber and the glass fiber may be removed by screening. The product of the first pyrolysis discharged from the first pyrolysis reactor 1210 may be screened before the second pyrolysis. The carbon fiber and the glass fiber and some of the char are separated by a screen. As a screen for separating the char, for example, a mesh having a diameter of 50 mm or less may be used.

The second pyrolysis may be performed in the second pyrolysis reactor. The second pyrolysis is a combustion reaction. The lump of the carbon fiber and the glass fiber from which some char has been removed is transferred to the second pyrolysis reactor 1210'. At this stage, the carbon fiber and glass fiber may have char stuck between the fibers. In the process of the second pyrolysis, combustion gas containing about 10% oxygen burns the remaining epoxy and char. The remaining epoxy and char are removed by the second pyrolysis process, i.e. the combustion process, and only the carbon fiber and the glass fiber remain.

A heat source for the second pyrolysis may be combustion gas. The temperature of the combustion gas injected into the second pyrolysis reactor 1210' may be 500 to 600°C, preferably 500°C. Oxygen concentration in the combustion gas may be approximately 10%. Resin and char remaining in the lump of the carbon fiber and the glass fiber are pyrolyzed by a combustion reaction within the second pyrolysis reactor.

A portion of exhaust gas discharged from the second pyrolysis reactor 1210' may be supplied as hot air to the storage module 1130 through a heat exchanger of the heat supply unit 1300. Accordingly, the moisture of the shredded waste composite material may be reduced.

The residence time of the lump of the carbon fiber and glass fiber in the second pyrolysis reactor 1210' may be 3 hours or less. In this case, when oxygen concentration inside the second pyrolysis reactor 1210' is high, oxidation of a heating target may occur, so the oxygen concentration is maintained at 10% or less.

Oxygen concentration within the second pyrolysis reactor 1210' may be controlled by a blower fan and a mixer (not shown).

Outside air may be introduced into the second pyrolysis reactor 1210' by the blower fan. The mixer may control oxygen concentration to 10% or less by mixing 70 to 80% combustion gas and 20 to 30% outside air. To this end, a plurality of sensors are mounted inside the second pyrolysis reactor 1210' to continuously sense the oxygen concentration. When the oxygen concentration exceeds 15%, the mixing ratio of the combustion gas may be increased to control the oxygen concentration, and when the oxygen concentration is less than 7%, the mixing ratio of the outside air may be increased to control the oxygen concentration. In this embodiment, the sensors are placed within the second pyrolysis reactor 1210', but in other embodiments, the sensors may be placed in the exhaust line to measure oxygen concentration in exhausted gas.

As the result of the second pyrolysis, carbon fiber and glass fiber with high purity remain.

As illustrated in FIG. 4, the heat supply unit 1300 may be provided with a burner 1310, a heat exchanger 1320, an air blower 1330, a scrubber 1340, and a chimney 1350. The burner 1310 supplies thermal energy required for a pyrolysis reaction to the pyrolysis reactor 1210.

Heat energy required for the reaction of the first pyrolysis may be supplied by a first burner 1311. The first burner 1311 heats the first pyrolysis reactor 1210 in an indirect heating manner, allowing heat to be transferred to the interior of the pyrolysis reactor 1210. The heat source of the first burner 1311 may be pyrolysis gas and LNG/LPG. The gas tank supplies pyrolysis gas and LNG/LPG to the first burner. LNG/LPG may be used as an auxiliary heat source. A temperature may be finely adjusted by LNG/LPG.

Through the first pyrolysis, resins such as epoxy and wood contained in the waste composite material are gasified, and pyrolysis gas is discharged. The first pyrolysis results in a lump of a carbon fiber and a glass fiber together with some unpyrolyzed resin and char.

Heat energy required for the reaction of the second pyrolysis may be supplied by a second burner 1312. The heat source of the second burner 1312 may be combustion gas. Some of resin and char unpyrolyzed by the second pyrolysis are burned, leaving behind a carbon fiber and a glass fiber.

When the first pyrolysis and the second pyrolysis are performed in one reactor, the first burner 1311 and the second burner 1312 may be one burner 1310 rather than separate burners. In this case, during the first pyrolysis, pyrolysis gas and LNG/LPG may be supplied as fuel, and during the second pyrolysis, combustion gas may be supplied as fuel.

The heat exchanger 1320 receives heat from the first pyrolysis reactor 1210 and supplies hot air to the storage module 1130. Shredded waste composite materials are accommodated in the storage module 1130. The shredded waste composite materials contain moisture, and the moisture contained in waste blades is reduced by hot air. By hot air, the amount of moisture in the waste composite material may be reduced to less than 10% of the total weight of the waste composite material introduced. The heat exchanger 1320 may be a shell-and-tube type heat exchanger.

The air blower 1330 draws pyrolysis gas from the heat exchanger 1320 and moves it to the scrubber. When the gases discharged from the pyrolysis reactors 1210 and 1210' are introduced directly into the scrubber, liquid contained in the scrubber evaporates. To prevent this, the gases discharged from the pyrolysis reactors 1210 and 1210' pass through the heat exchanger 1320 to lower the temperature of the gas to about 200 to 300°C before the gas is introduced into the scrubber.

The scrubber 1340 processes waste gas. A dust collection device using NaOH aqueous solution may be used as the scrubber 1340. SOx/NOx, etc. in combustion gas may be controlled by scrubbing with NaOH aqueous solution. In this embodiment, a washing dust collection device using NaOH aqueous solution is used, but the scrubber is not limited thereto, and a scrubber using a filtration method or an electrostatic method may also be used.

The chimney 1350 finally discharges waste gas and by-products. The chimney 1350 is configured to finally discharge air pollutants, and in emergency situations such as when a predetermined amount or more of air pollutants are detected, air pollutants may be urgently controlled by igniting a flare stack.

The chimney 1350 discharges combustion gases discharged from the first pyrolysis reactor 1210 and the second pyrolysis reactor 1210' to the outside of the apparatus.

In the present disclosure, the shredding and pyrolysis of the waste composite material, and the separation of a carbon fiber and a glass fiber from the waste composite material may be performed in one process, and the waste composite material is moved to each unit by a conveyor. One or more conveyors may be linked together to control residence time in each unit.

As illustrated in FIG. 5, the reforming unit 1400 may be provided with a catalyst tower 1410, a heat exchanger 1420, a separation tank 1430, a washing tank 1440, a pressure control tank 1450. The reforming unit 1400 converts pyrolysis gas into oil. About 30% of total pyrolysis gas may be converted into pyrolysis oil. This saves the amount of fuel required to heat the pyrolysis reactor.

Reforming is the process of cutting the hydrocarbon chains of a polymer into shorter chains, and is performed by using the catalyst tower in this embodiment. Catalytic reforming may reduce energy demand required for the process and optimize the overall process.

The catalyst tower 1410 may have a structure in which multiple catalyst layers are stacked. Each catalyst layer is provided with a catalyst material. Various catalysts such as FCC, spent FCC, HZSM-5, ZSM-5, Cu-Al2O3, Co-Mo/z, Zeolite-0, natural zeolite (NZ), Red Mud, Al(OH)3Ca(OH)2, FeO3 may be used as catalysts. In this embodiment, a commercial catalyst of the zeolite series such as ZSM-5 is used, but the catalyst is not limited thereto. By using the multi-layered catalyst tower, the residence time of the pyrolysis gas may be secured.

The pyrolysis gas flows into the lower part of the catalyst tower 1410 and is reformed as pyrolysis gas flows upward. Zeolite has many small pores formed therein, and oil vapor included in the pyrolysis gas breaks hydrocarbon chains as the oil vapor passes through the zeolite. Higher molecular hydrocarbons are converted to lower molecular hydrocarbons by the zeolite catalyst.

The heat exchanger 1420 cools pyrolysis gas passing through the catalyst tower 1410 and converts oil vapor into oil. Water may be used as a medium for heat exchange. The heat exchanger 1420 may have a three-stage structure in a shell-and-tube format, but is not limited thereto and various forms of the heat exchanger may be used.

The separation tank 1430 separates condensed pyrolysis gas into gas and oil. The cooled pyrolysis gas moves to the separation tank 1430. Gaseous pyrolysis gas is discharged from the upper part of the separation tank 1430, and condensed oil is discharged from the lower part of the separation tank 1430. The condensed oil may be stored in a pyrolysis oil storage tank 1460. Oil stored in the pyrolysis oil storage tank 1460 may undergo post-processing such as distillation.

The washing tank 1440 removes foreign substances from the gaseous pyrolysis gas. The pyrolysis gas discharged from the upper part of the separation tank 1430 is introduced into the washing tank 1440. The washing tank 1440 neutralizes the pyrolysis gas and reduces the amount of hydrogen chloride (HCl) in the pyrolysis gas. The washing tank 1440 contains aqueous solution of sodium hydroxide (NaOH), and the pyrolysis gas passes through the aqueous solution of sodium hydroxide to remove hydrogen chloride. The neutralized pyrolysis gas flows to the pressure control tank 1450.

In this embodiment, one washing tank 1440 is provided, but in another embodiment, an additional washing tank may be provided. When pyrolysis oil droplets are not completely removed by first washing, an additional washing tank may be installed. The remaining pyrolysis oil droplets are removed by the additional washing tank, thereby further increasing the purity of the pyrolysis gas.

The pressure control tank 1450 is disposed to prevent backflow of pyrolysis gas before the pyrolysis gas is supplied to the burner 1310. Aqueous solution that does not react with the pyrolysis gas is accommodated at a predetermined height in the pressure control tank 1450, and the pyrolysis gas is introduced into the aqueous solution. The pyrolysis gas is discharged through the outlet of the upper end of the pressure control tank 1450. The pyrolysis gas discharged from the pressure control tank 1450 may be supplied to the burner 1310.

The reformed pyrolysis gas is used as fuel to heat the pyrolysis reactor 1210 again. By reusing the pyrolysis gas as fuel, overall fuel usage may be reduced and pollutant emissions may be reduced. When pyrolysis gas is not used according to the operating policy of the device, the washing tank 1440 and the pressure control tank 1450 are turned off, and pyrolysis gas is discharged through the scrubber 1340 and the chimney 1350. Alternatively, pyrolysis gas that has passed through the washing tank 1440 and the pressure control tank 1450 may be discharged through the chimney 1350.

As illustrated in FIG. 6, the separation unit 1500 may include a washing part 1510, a separation part 1520, a first chamber 1530, a second chamber 1540, carding modules 1531 and 1541, and pelletizing modules 1532 and 1542. The washing part 1510 receives the product of the second pyrolysis and washes the product so that only the lump of carbon fiber and glass fiber remains. First, the product of the second pyrolysis is screened to remove ash which is 20 mm or smaller in size. The filtered ash is stored in an ash storage chamber. Since the ash is at a very high temperature, a cooling jacket may be disposed at the lower end of the ash storage chamber. The cooling jacket may lower the temperature of the ash accommodated in the ash storage chamber by receiving cold water from the cooling tower of the reforming unit 1400.

The lump of the carbon fiber and glass fiber from which the ash has been removed is cleaned. The washing may be performed by using a wet washing method.

The separation part 1520 may separate the product of the second pyrolysis into a first material and a second material. The first material may be r-CF (recycled carbon fiber), and the second material may be r-GF (recycled glass fiber). The r-CF and the r-GF may be separated from each other by using density difference therebetween. There are two methods of utilizing density differences: a dry method and a wet method. The dry method, which uses the flow of air, moves lightweight carbon fibers by causing the flow of air over the product of the second pyrolysis moving on a conveyor.

The wet method is a method of separating a carbon fiber and a glass fiber from each other by using liquid with an intermediate density between that of the carbon fiber and the glass fiber.

The carbon fiber and the glass fiber separated by the separation part 1520 may be moved to the first chamber 1530 and the second chamber 1540, respectively. The separation of the carbon fiber and the glass fiber may be performed on a conveyor.

The carbon fiber and the glass fiber stored in the first chamber 1530 and the second chamber 1540, respectively, may be post-processed for shipment.

The carding modules 1531 and 1541 brush the r-CF and the r-GF having predetermined lengths. The lengths of the r-CF and the r-GF from which resin has been removed are less than 50 mm. The r-CF and the r-GF are brushed for post-processing since their fiber lengths are short. Through the brushing, the fibers gain directionality and are elongated. The brushed r-CF and r-GF are pressed and processed into nonwoven fabrics. The brushing is not easy when the lengths of the r-CF and the r-GF are 5 mm or less. The r-CF and the r-GF with lengths of 5 mm or less are not fed into carding modules 1531 and 1541. Before the recovered r-CF and r-GF are fed into the carding modules 1531 and 1541, the r-CF and r-GF with lengths of 5 mm or less may be separated by using a mesh, etc.

The pelletizing modules 1532 and 1542 melt and mix the recovered r-CF, r-GF, and resin to make pellets. The pelletizing modules 1532 and 1542 cut the nonwoven fabrics produced in the carding modules 1531 and 1541 to predetermined sizes and mix them with the melted resin. The r-CF and r-GF nonwoven fabrics having structures hardened by compression are shipped after being cured together with the resin.

Meanwhile, the r-CF and r-GF with lengths of 5 mm or less are not fed into the carding modules 1531 and 1541 but are directly fed into the pelletizing modules 1532 and 1542, respectively. The r-CF and r-GF with lengths of 5 mm or less are directly mixed with the resin and pelletized.

The pelletizing modules 1532 and 1542 may produce pellet products according to the needs of a user by mixing the r-CF and r-GF which are carded, and r-CF and r-GF single fibers of 5 mm or less with ready-made resin. A controller (not shown) may receive the size of the particle of the waste composite material fed into the pyrolysis reactor from the waste composite material supply unit 1100, and may determine whether the carbon fibers and glass fibers stored in the first chamber 1530 and the second chamber 1540, respectively, should be moved to the pelletizing modules 1532 and 1542 via the carding modules 1531 and 1541, or directly to the pelletizing modules 1532 and 1542.

In another embodiment, when the waste composite material is fed into the pyrolysis reactor without being shredded, carbon fibers and glass fibers may be controlled to move through the carding modules 1531 and 1541 to the pelletizing modules 1532 and 1542. When the size of the particles of the waste composite material fed into the pyrolysis reactor is small, the carbon fibers and glass fibers may be directly transferred to the pelletizing modules 1532 and 1542.

The shredding size of the waste composite material may be adjusted during a shredding stage depending on the needs of a user. For example, when pelletizing is directly required without forming a nonwoven fabric, the waste composite material may be shredded to 5 mm or less.

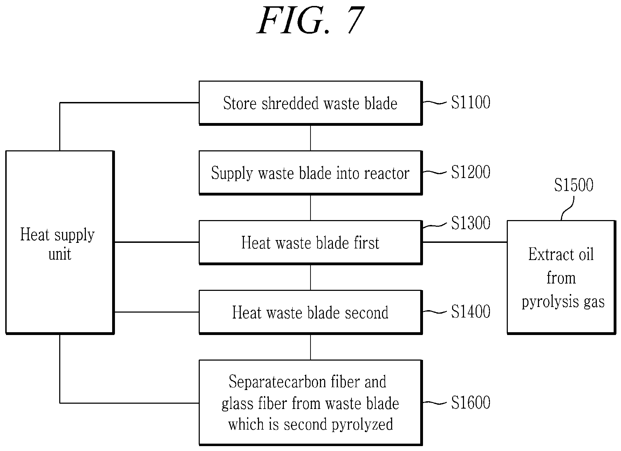

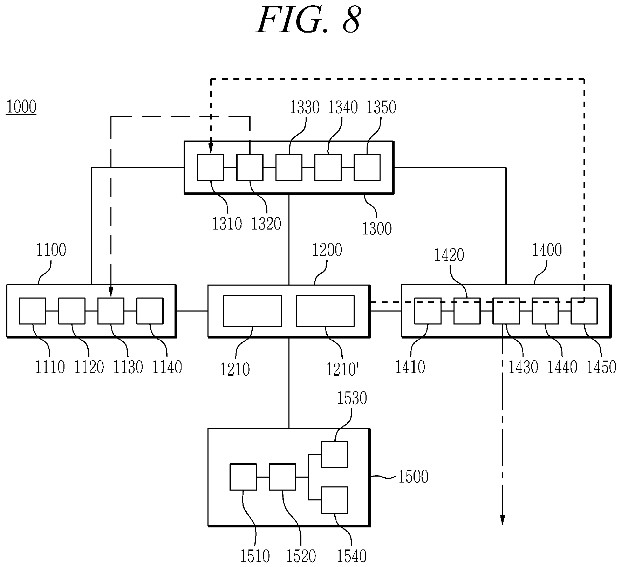

FIG. 7 is a flowchart illustrating a method for recovering carbon fiber and glass fiber according to an embodiment of the present disclosure, and FIG. 8 is a diagram illustrating overall the apparatus for recovering carbon fiber and glass fiber according to an embodiment of the present disclosure.

In order to separate the waste composite material according to the present disclosure, the waste composite material is shredded and stored as illustrated in FIG. 7 in S 1100. The waste composite material cut into length of 10 m or less is shredded to thickness of 20 mm or less. The waste composite material may be fed into the shredding module 1110 and shredded.

Meanwhile, the shredding module 1110 may adjust the shredding size of the waste composite material if necessary. The shredding size of the waste composite material may be adjusted depending on the target condition and final product of the waste composite material. When recovery of long fibers is possible, the shredding sizes of waste blades may be increased.

A large amount of dust is generated during the shredding process of the waste composite material. To prevent dust from escaping outside the shredding module 1110, the inlet of the shredding module 1110 may be sealed. Additionally, dust generated during the shredding process of the waste composite material may be sucked by the dust suction part and collected in a designated space. Air may be continuously circulated within the shredding module 1110 to collect dust.

After shredding the waste composite material, the shredded waste composite material may be screened to remove particles having sizes of a predetermined size or less. The shredded waste composite material has particles of different sizes. When the entire waste composite material with different particle sizes is pyrolyzed in the pyrolysis reactor 1210, there is a risk that blade fragments with smaller particle sizes may be carbonized and contaminate the product of the first pyrolysis. Accordingly, the shredded waste blade may be moved on a screen, and when the size of each of shredded particles is a predetermined size or less, the shredded particles may be separated and fall below the screen. The screen may be vibrated to facilitate the separation of small particles.

The shredded waste composite material is transported to the storage module 1130. The storage module 1130 stores the waste composite material for a predetermined period of time before the waste composite material is fed into the reactor. As illustrated in FIG. 8, the storage module 1130 is supplied with hot air from the heat exchanger 1320. In order to reduce the generation of water vapor during the pyrolysis process of the waste composite material, hot air may be supplied to the storage module to dry the stored waste composite material.

Next, the waste composite material stored in the storage module 1130 is fed into the pyrolysis reactor 1210 in S1200. The feeding of the waste composite material may be performed either one-time or continuously. A single-shaft screw feeder may be used to feed the shredded waste composite material. Meanwhile, the stored waste composite material is at a high temperature due to hot air. Accordingly, since temperature difference between the stored waste composite material and the reaction unit is very large, it is necessary to feed the waste composite material after lowering the temperature of the waste composite material. The cooling jacket may be disposed on each of the lower surface and side surface of the feeding module to cool the waste composite material being fed. The cooling jacket may lower the temperature of ash contained in the ash storage chamber by receiving cold water from the cooling tower of the reforming unit 1400.

To minimize the inflow of oxygen into the pyrolysis reactor 1210 when the waste composite material is fed, the feeding part of the pyrolysis reactor 1210 may have a double valve structure. The upper end of the feeding part is open, and the upstream side of a passage thereof is provided with a first valve, and the downstream side of the passage is provided with a second valve. The first valve is installed on the upstream side of the passage, and the second valve is installed on the downstream side of the passage.

The first valve and the second valve do not open simultaneously, but are controlled to open sequentially. The first valve and the second valve may be opened in a sliding manner, and the degree of opening may be adjusted depending on the amount of the fragments of the waste composite material to be fed. As each of the plurality of valves is opened, a desired amount of the fragments of the waste composite material may be fed into the pyrolysis reactor 1210.

The first valve may be opened while the second valve is closed. After the first valve is opened and a predetermined amount of the shredded waste composite material is fed in, the first valve is closed to seal the feeding part, and then the second valve is opened. Flue gas may be injected through a gas inlet simultaneously with the opening of the second valve. While the second valve is open, flue gas is supplied into the passage of the feeding part, and when the second valve is closed again, the flue gas is discharged through a gas outlet. By opening the second valve, the waste composite material is fed into the pyrolysis reactor 1210.

The waste composite material is first pyrolyzed in S1300. Resin such as epoxy and wood contained in the waste composite material are gasified by the first pyrolysis.

The heat supply unit 1300 heats the first pyrolysis reactor 1210 in an indirect heating manner. Heat energy required for the reaction of the first pyrolysis may be supplied by the first burner. The heat source of the first burner may be pyrolysis gas and LNG or LPG. A temperature inside the first pyrolysis reactor 1210 may be 400 to 500°C.

During the first pyrolysis, oxygen concentration within the first pyrolysis reactor 1210 may be maintained at 10% or less. The residence time of the fragments of the waste composite material in the first pyrolysis reactor may be 9 hours or less.

The shredded blade, which is first pyrolyzed, is subjected to secondary pyrolysis at S1400. The lump of a carbon fiber and a glass fiber containing char is secondly pyrolyzed in the second pyrolysis reactor.

As a result of the first pyrolysis, resin such as epoxy and wood contained in the waste composite material are gasified, but resin that is not gasified is carbonized (charred) and remains on the surfaces of the carbon fiber and glass fiber. The resin and char remaining in the lump of the carbon fiber and glass fiber are pyrolyzed by the second pyrolysis.

The heat supply unit 1300 heats the second pyrolysis reactor 1210' in an indirect heating manner. Heat source for the second pyrolysis may be combustion gas. The temperature of combustion gas injected into the second pyrolysis reactor 1210' may be 500 to 600°C.

The residence time of the lump of the carbon fiber and glass fiber in the second pyrolysis reactor 1210' may be 3 hours or less. Oxygen concentration in the second pyrolysis reactor 1210' may be 10% or less.

The first pyrolysis and the second pyrolysis may be performed in one pyrolysis reactor or in two or more pyrolysis reactors. The first pyrolysis reactor and the second pyrolysis reactor may be the same types of reactors, but may be different types of reactors. For example, the first pyrolysis reactor may be a rotary kiln and the second pyrolysis reactor may be a screw type. The internal temperatures of the first and second pyrolysis reactors 1210 and 1210' may be 400 to 500°C.

In an embodiment, the first pyrolysis and the second pyrolysis may be performed in one pyrolysis reactor 1210. In this case, the pyrolysis reactor 1210 may be a batch pyrolysis reactor. A predetermined amount of the waste composite material is fed into the pyrolysis reactor 1210, and the first pyrolysis and second pyrolysis are sequentially performed in the pyrolysis reactor 1210. After the first pyrolysis is performed, impurities such as char are screened out, and the second pyrolysis may be performed continuously in the pyrolysis reactor 1210. During the first pyrolysis, the burner may be supplied with pyrolysis gas and LNG/LPG from the fuel tank, and during the second pyrolysis, the burner may be supplied with combustion gas from the first pyrolysis reactor.

In another embodiment, the two pyrolysis reactors 1210 and 1210' may be arranged in series to perform the first pyrolysis and the second pyrolysis, respectively. In this case, the pyrolysis reactors 1210 and 1210' may be a batch pyrolysis reactor. The first pyrolysis is performed in the first pyrolysis reactor 1210, and the second pyrolysis is performed in the second pyrolysis reactor 1210'. A predetermined amount of the waste composite material is fed into the first pyrolysis reactor 1210 and the first pyrolysis is performed. When the first pyrolysis is completed, impurities such as char are screened out from the product of the first pyrolysis and the product of the first pyrolysis is moved to the second pyrolysis reactor. The second pyrolysis is performed in the second pyrolysis reactor 1210'. During the first pyrolysis, the burner may be supplied with pyrolysis gas and LNG or LPG from the fuel tank, and during the second pyrolysis, the burner may be supplied with combustion gas from the first pyrolysis reactor.

In another embodiment, the two pyrolysis reactors 1210 and 1210' are arranged in series to perform the first pyrolysis and the second pyrolysis, respectively, and each of the pyrolysis reactors 1210 and 1210' may be a continuous pyrolysis reactor. A predetermined amount of the waste composite material is continuously fed into the first pyrolysis reactor 1210 to perform the first pyrolysis. After impurities such as char are screened out from the product of the first pyrolysis discharged from the first pyrolysis reactor 1210 while the product of the first pyrolysis is transferred to the second pyrolysis reactor 1210', the product of the first pyrolysis is continuously fed into the second pyrolysis reactor 1210'. The second pyrolysis is performed in the second pyrolysis reactor 1210' to pyrolyze resin and char remaining in the lump of the carbon fiber and the glass fiber.

In another embodiment, two or more first pyrolysis reactors 1210 may be connected to each other and used by considering the residence time of the waste composite material in the reactor and the size of the waste composite material to be introduced, etc. For example, the reaction unit 1200 may include two first pyrolysis reactors 1210 and 1210 and one second pyrolysis reactor 1210' to secure the residence time during the first pyrolysis.

Oil is extracted from pyrolysis gas in S1500. The reforming unit 1400 may convert pyrolysis gas into oil. A zeolite-based catalyst may be used for reforming pyrolysis gas. The pyrolysis gas flows into the lower part of the catalyst tower 1410 and is reformed while the pyrolysis gas flows upward. Zeolite has many small pores, and oil vapor contained in the pyrolysis gas breaks hydrocarbon chains as the oil vapor passes through the zeolite. Higher molecular hydrocarbons are converted to lower molecular hydrocarbons by the zeolite catalyst.

The heat exchanger 1420 cools the pyrolysis gas passing through the catalyst tower 1410 and converts the oil vapor into oil. Water may be used as a medium for heat exchange.

The separation tank 1430 separates condensed pyrolysis gas into gas and oil. The cooled pyrolysis gas moves to the separation tank 1430. Gaseous pyrolysis gas is discharged from the upper part of the separation tank 1430, and condensed oil is discharged from the lower part of the separation tank 1430. The condensed oil may be stored in the pyrolysis oil storage tank 1460. Oil stored in the pyrolysis oil storage tank 1460 may undergo post-processing such as distillation.

About 30% of the total pyrolysis gas may be converted into pyrolysis oil by the reforming unit 1400. This may reduce the amount of fuel required to heat the pyrolysis reactor.

Carbon fibers and glass fibers are separated from waste composite material which is secondarily pyrolyzed in S1600. The product of the second pyrolysis may be separated into r-CF (recycled carbon fiber) and r-GF (recycled glass fiber) by the separation unit 1500.

Specifically, the product of the second pyrolysis is screened to remove ash which is 20 mm or smaller in size. The filtered ash is stored in the ash storage chamber. The lump of carbon fiber and glass fiber from which the ash has been removed is washed. Washing may be performed by using a wet washing method. The r-CF and the r-GF which are washed may be separated from each other by using density difference therebetween.

The carbon fiber and the glass fiber separated by the separation part 1520 may be moved to the first chamber 1530 and the second chamber 1540, respectively. The carding modules 1531 and 1541 brush the r-CF and the r-GF, respectively, having predetermined lengths. The brushed r-CF and r-GF are compressed and processed into nonwoven fabrics. The pelletizing modules 1532 and 1542 melt and mix the recovered r-CF, r-GF, and resin to make pellets. The pelletizing modules 1532 and 1542 cut the nonwoven fabrics produced in the carding modules 1531 and 1541 to predetermined sizes and mix them with the melted resin. The r-CF and r-GF nonwoven fabrics having structures hardened by compression, may be shipped after being cured together with the resin.

The r-CF and r-GF with lengths of 5 mm or less are not fed into the carding modules 1531 and 1541 but are directly fed into the pelletizing modules 1532 and 1542, respectively. The r-CF and r-GF with lengths of 5 mm or less are directly mixed with the resin and pelletized.

The controller may receive the size of the particle of the waste composite material fed into the pyrolysis reactor from the waste composite material supply unit 1100, and may determine whether carbon fibers and glass fibers stored in the first chamber and the second chamber, respectively, should be moved to the pelletizing modules via the carding modules, or directly to the pelletizing modules. The shredding size of the waste composite material may be adjusted during a shredding stage depending on the needs of a user.

In the present disclosure, the shredding and pyrolysis of the waste composite material, and the separation of a carbon fiber and a glass fiber may be performed in one process, and the waste composite material is moved to each unit by a conveyor. One or more conveyors may be linked together to control residence time in each unit.

While the embodiments of the present disclosure have been described, it will be apparent to those skilled in the art that various modifications and variations can be made in the present disclosure through addition, change, omission, or substitution of components without departing from the spirit of the disclosure as set forth in the appended claims, and such modifications and changes may also be included within the scope of the present disclosure.

## Claims

1. An apparatus (1000) for recovering carbon fiber and glass fiber, the apparatus comprising:
a waste composite material supply unit (1100) including a shredding module (1110) configured to shred a waste composite material, and a storage module (1130) configured to store the shredded waste composite material;
a reaction unit (1200) configured to heat the waste composite material supplied from the waste composite material supply unit (1100);
a heat supply unit (1300) configured to supply heat to the reaction unit (1200);
a reforming unit (1400) configured to separate pyrolysis gas discharged from the reaction unit (1200) into gas and oil; and
a separation unit (1500) including a separation part (1520) configured to separate a product of the reaction unit (1200) into a first material and a second material, a first chamber (1530) configured to accommodate the first material, and a second chamber (1540) configured to accommodate the second material.

2. The apparatus (1000) of claim 1, wherein the reaction unit (1200) includes one pyrolysis reactor (1210),
wherein the pyrolysis reactor (1210) is a batch pyrolysis reactor, and
a first pyrolysis and a second pyrolysis are performed sequentially in the pyrolysis reactor (1210).

3. The apparatus (1000) of claim 1, wherein the reaction unit (1200) includes at least two pyrolysis reactors (1210) and (1210').

4. The apparatus (1000) of claim 3, wherein the plurality of pyrolysis reactors (1210) and (1210') are batch pyrolysis reactors.

5. The apparatus (1000) of claim 3, wherein the plurality of pyrolysis reactors (1210) and (1210') are continuous pyrolysis reactors.

6. The apparatus (1000) of any one of claims 1 to 5, wherein the reforming unit (1400) includes a catalyst tower (1410), a heat exchanger (1420), and a separation tank (1430).

7. The apparatus (1000) of any one of claims 1 to 6, wherein the separation unit (1500) further includes:
a first carding module (1531) configured to card the first material and a first pelletizing module (1532) configured to pelletize the first material; and
a second carding module (1541) configured to card the second material, and a second pelletizing module (1542) configured to pelletize the second material.

8. The apparatus (1000) of claim 7, wherein the separation unit (1500) detects a length of each of the first material and the second material, and feeds the first material and the second material into the first pelletizing module (1532) and the second pelletizing module (1542), respectively, when the length of each of the first material and the second material is 5mm or less.

9. A method for recovering carbon fiber and glass fiber, the method comprising:
supplying a waste composite material into a reactor;
heating, first, the waste composite material;
heating, second, the waste composite material which is first heated;
extracting oil from pyrolysis gas discharged from the first heating; and
separating a product of the second heating into a first material and a second material.

10. The method of claim 9, wherein the first heating and the second heating are performed sequentially in one pyrolysis reactor (1210).

11. The method of claim 9, wherein the first heating is performed in a first pyrolysis reactor (1210), and the second heating is performed in a second pyrolysis reactor (1210').

12. The method of any one of claims 9 to 11, wherein in the first heating, a heat source is the pyrolysis gas and LNG or LPG, and in the second heating, a heat source is combustion gas.

13. The method of any one of claims 9 to 12, wherein in the extracting of oil, a zeolite-based catalyst is used for reforming the pyrolysis gas.

14. The method of any one of claims 9 to 13, wherein in the separating, the first material and the second material are separated from each other by density difference therebetween.

15. The method of any one of claims 9 to 14, wherein in the separating, each of the first material and the second material is carded and then pelletized.
